Europäisches Patentamt

European Patent Office

Office européen des brevets

(11) Veröffentlichungsnummer: **0 311 833 B1**

## EUROPÄISCHE PATENTSCHRIFT

(45) Veröffentlichungstag der Patentschrift: **02.12.92**

(51) Int. Cl.⁵: **A01C 5/06**

(21) Anmeldenummer: **88115817.4**

(22) Anmeldetag: **26.09.88**

(54) **Sämaschine.**

(30) Priorität: **15.10.87 DE 3734869**

(43) Veröffentlichungstag der Anmeldung:
**19.04.89 Patentblatt 89/16**

(45) Bekanntmachung des Hinweises auf die
Patenterteilung:
**02.12.92 Patentblatt 92/49**

(84) Benannte Vertragsstaaten:
**DE FR GB**

(56) Entgegenhaltungen:
**EP-A- 0 171 719**
**EP-A- 0 217 387**
**GB-A- 2 176 083**
**US-A- 2 499 095**
**US-A- 4 653 412**

(73) Patentinhaber: **Rabewerk GmbH + Co.**

**W-4515 Bad Essen(DE)**

(72) Erfinder: **Gehrke, Rudolf, Dipl.-Ing.**
**Lerchenweg 4**
**W-2990 Papenburg 1(DE)**

(74) Vertreter: **Missling, Arne, Dipl.-Ing.**
**Patentanwalt Bismarckstrasse 43**
**W-6300 Giessen(DE)**

Rank Xerox (UK) Business Services

## Beschreibung

Die Erfindung betrifft eine Sämaschine mit zumindest einem mittels eines um eine horizontale Achse schwenkbaren Trägers an der Sämaschine gelagerten, eine Austrittsöffnung für Saatgut aufweisenden Scharkörper, mit einem im Bereich des Scharkörpers mündenden Saatrohr und mit einer am Scharkörper angeordneten Scharspitze, wobei am Endbereich des Scharkörpers im Bereich der Austrittsöffnung eine um eine horizontale Achse verschwerkbare, in eine die Austrittsöffnung verschließende Stellung bringbare Stützklappe vorgesehen ist. Eine derartige Sämaschine zeigt die EP-A-0 171 719.

Bekannte Sämaschinen weisen eine massiv ausgebildete Scharspitze auf, welche beim Betrieb der Sämaschine eine Saatfurche in dem Ackerboden ausbildet, in welche das Saatgut eingebracht wird. Zu diesem Zwecke ist, in Bewegungsrichtung der Sämaschine hinter der Scharspitze eine Austrittsöffnung für Saatgut angeordnet. Durch die Austrittsöffnung fällt das Saatgut in die Saatfurche. Wenn die Sämaschine in ordnungsgemäßer Weise in Vorwärtsfahrt bewegt wird, ist es ausgeschlossen, daß die Austrittsöffnung für das Saatgut mit der Erde des Ackerbodens in Kontakt kommt und verstopft. Es ist jedoch sowohl beim Absenken der Scharspitze zu Beginn des Sävorganges als auch bei Beendigung der Vorwärtsfahrt der Sämaschine stets die Gefahr gegeben, daß der Scharkörper entweder, bezogen auf die Vorwärtsfahrtrichtung der Sämaschine, rückwärts bewegt wird oder daß der Scharkörper in vertikaler Richtung auf den Akkerboden gedrückt wird. Bei derartigen Vorgängen gelangt auch die Austrittsöffnung für das Saatgut in Kontakt mit dem Ackerboden und wird durch Erdklumpen oder Steine verstopft. Dies macht sich ausgesprochen negativ bemerkbar, da die Bedienungsperson eine derartige Verstopfung möglicherweise nur sehr spät oder überhaupt nicht bemerkt, so daß bei einem weiteren Sävorgang kein Saatgut in den Ackerboden eingebracht wird.

Das Verstopfen der Austrittsöffnung beim Absenken des Scharkörpers oder der Sämaschine wird insbesondere durch die Kinematik des Anlenkgestänges, mit welchem die Sämaschine oder der Scharkörper an einer Zugmaschine gelagert sind, beeinflußt. Weiterhin übt die gelenkige Aufhängung des gesamten Säschares in diesem Zusammenhang einen ungünstigen Einfluß aus. Üblicherweise ist eine Sämaschine mit einem Dreipunktgestänge an einer Zugmaschine oder einem Schlepper gelagert. Wenn die Sämachine bzw. der Scharkörper abgesenkt werden, schwenken diese um einen Momentanpol, der sich aus den Richtungen des Oberlenkers und des Unterlenkers des Dreipunktgestänges ergibt. Beim Aufsetzen der Scharspitze auf den Boden tritt bei der Bewegung um den Momentanpol auch eine rückwärts gerichtete Komponente im Bereich der Scharspitze auf, welche bewirkt, daß der Bereich der Austrittsöffnung in dem zur Saat vorbereiteten Ackerboden nach hinten verschoben wird und auf diese Weise verstopft wird. Diese durch die Aufhängung der Sämaschine am Schlepper hervorgerufene rückwärts gerichtete Bewegungskomponente ist zwar nicht übermäßig groß, kann jedoch zum Verstopfen der Austrittsöffnung des Scharkörpers ausreichend sein. Eine weitere rückwärts gerichtete Komponente ergibt sich bei einer Schwenkung des den Scharkörper tragenden Trägers relativ zu der Sämaschine um eine horizontale Achse. Eine derartige Verschwenkung ist üblicherweise vorgesehen, um Bodenunebenheiten während des Sävorgangs ausgleichen zu können. Die beiden eben beschriebenen Rückwärtsbewegungen können sich unter ungünstigen Betriebsbedingungen addieren, wodurch ein erhebliches Maß an Rückwärtsbewegung des Scharkörpers und damit der Austrittsöffnung hervorgerufen wird. Dies führt praktisch immer zu Verstopfung der Austrittsöffnung und damit zu der Notwendigkeit, durch zusätzliche Reinigungsvorgänge die Sämaschine wieder betriebsbereit zu machen.

Zur Vermeidung dieser Nachteile wurde bereits vorgeschlagen, in Fahrtrichtung hinter der Austrittsöffnung eine um eine vertikale Achse verschwenkbare Stützklappe vorzusehen, welche bei einer Rückwärtsbewegung des Scharkörpers etwas in den Boden eindringt und den Scharkörper anheben soll. Dies erweist sich jedoch insbesondere bei weichen Böden als unzureichend, da die Stützklappe zwar in den Boden eindringt, jedoch nicht in der Lage ist, den Scharkörper anzuheben, um ein Eindringen von Erdreich in die Austrittsöffnung zu vermeiden.

Eine ähnliche Vorrichtung ist auch aus der DE-OS 30 21 528 bekannt, bei welcher eine Schleifkufe vorgesehen ist, welche ähnlich der Stützklappe bei einer Rückwärtsbewegung des Scharkörpers diesen anheben soll. Dieser Anhebevorgang kann jedoch insbesondere bei weichen Böden nicht in zuverlässiger Weise erfolgen, so daß die Gefahr einer Verstopfung der Austrittsöffnung nicht beseitigt werden kann.

Aus der US-Patentschrift 4,653,412 ist eine Sämaschine bekannt, bei der der Scharkörper an einem Träger schwenkbar befestigt ist. Der Träger selbst ist über einen Stiel mit der eigentlichen Sämaschine verbunden. Auch bei einer solchen Anordnung besteht die Gefahr, daß die Austrittsöffnung am Saatrohr verstopft, wenn die Sämaschine zurückgesetzt oder der Träger in senkrechter Richtung verschoben wird. In beiden Fällen sind Relativbewegungen der Scharspitze am Erdboden unvermeidlich.

Der Erfindung liegt die Aufgabe zugrunde, eine Sämaschine der eingangs genannten Art zu schaffen, welche bei einfachem Aufbau und betriebssicherer Wirkungsweise bei allen Betriebsbedingungen, insbesondere bei einer Rückwärtsbewegung des Scharkörpers oder bei einer Absenkbewegung des Scharkörpers ein Verstopfen der Austrittsöffnung verhindert.

Die Aufgabe wird erfindungsgemäß mit den Merkmalen des Anspruches 1 oder des Anspruches 8 gelöst.

Die Erfindung zeichnet sich durch eine Reihe erheblicher Vorteile aus. Da der Scharkörper bzw. die Scharspitze um eine horizontale Achse schwenkbar am Träger gelagert sind, können diese bei einer Rückwärtsbewegung der Sämaschine oder beim Auftreten einer eine rückwärts gerichtete Komponente aufweisenden Bewegung verschwenkt oder verkippt werden, anstatt, wie beim Stand der Technik, bedingt durch die starre Verbindung, nach hinten verschoben zu werden. Gleichzeitig wird durch die schwenkbar an der Austrittsöffnung angeordnete Stützklappe bei jeder Verschwenkung des Scharkörpers oder der Scharspitze sichergestellt, daß ein Verstopfen der Scharaustrittsöffnung vermieden wird. Darüber hinaus führt die Verschwenkmöglichkeit dazu, daß der Berührungspunkt zwischen dem Scharkörper oder der Scharspitze und dem Boden erhalten bleibt, d.h. daß im direkten Kontaktbereich mit dem Boden keine gegen die Fahrtrichtung gerichtete Bewegungskomponente auftritt, durch welche die Möglichkeit des Eindringens von Erdreich in die Austrittsöffnung gegeben wäre. Ein weiterer Vorteil der erfindungsgemäßen Sämaschine ist dadurch gegeben, daß durch die Schwenkbarkeit des Scharkörpers bzw. der Scharspitze vermieden wird, daß diese beim Auftreffen auf ein feststehendes Hindernis bei Vorwärts- oder Rückwärtsbewegung beschädigt werden oder daß der den Scharkörper oder die Scharspitze lagernde Träger beschädigt wird.

In vorteilhafter Weise ist der Scharkörper aus einer Betriebsstellung, in welcher die Scharspitze von der Sämaschine abgewandt angeordnet ist, in eine Schwenkstellung verschwenkbar, in welcher die Scharspitze der Sämaschine angenähert angeordnet ist. Es erweist sich auch als vorteilhaft, daß die Scharspitze in ähnlicher Weise zwischen einer Betriebsstellung und einer Schwenkstellung verschwenkbar ist. Auf diese Weise wird erfindungsgemäß die Möglichkeit geschaffen, eine Rückwärtsbewegung durch die Verschwenkbarkeit auszugleichen, andererseits wird in vorteilhafter Weise der Bereich der Verschwenkbarkeit begrenzt, um zum einen Beschädigungen des Trägers oder der Scharspitze bzw. des Scharkörpers durch eine übermäßige Verschwenkung zu vermeiden, und um zum anderen zu verhindern, daß Bereiche des Scharkörpers oder der Scharspitze mit dem Erdreich in Berührung kommen, welche für eine Anlage an das Erdreich nicht ausgebildet sind, da sie beispielsweise nicht die ausreichende Materialfestigkeit aufweisen.

Eine weitere günstige Ausgestaltung ist dadurch gegeben, daß der Scharkörper eine der Sämaschine zugewandte erste Wandung und eine in einem Abstand zur ersten Wandung angeordnete, der Sämaschine abgewandte zweite Wandung umfaßt, und daß die erste Wandung sich in der Betriebsstellung in Anlage an dem Träger befindet; während die zweite Wandung in der Schwenkstellung in Anlage an den Träger gelangt. Der so ausgebildete Scharkörper ist kastenartig oder rahmenartig gestaltet, wobei die Seitenwandungen des Kastens oder Rahmens zugleich als Anschlagflächen dienen, durch welche die Schwenkbewegung relativ zu dem Träger begrenzt werden kann. Auf diese Weise ist es zum einen möglich, während des Sävorganges in sicherer und ausreichender Weise eine Kraftübertragung auf die Scharspitze zu ermöglichen und zum anderen eine ausreichend feste Anlage zu schaffen, um die Schwenkstellung des Scharkörpers zu begrenzen. Weiterhin erweist es sich als vorteilhaft, daß keine zusätzlichen Bauteile erforderlich sind, da die erste und die zweite Wandung bei einem üblichen kastenförmigen Scharkörper bereits vorhanden sind.

Eine besonders vorteilhafte Ausgestaltung der Erfindung ist auch dadurch gegeben, daß der Scharkörper bzw. die Scharspitze mittels eines elastischen Elements in ihre Betriebsstellung vorgespannt sind. Auf diese Weise wird erreicht, daß sich der Scharkörper bzw. die Scharspitze im unbelasteten Zustand stets in der Betriebsstellung befinden, wodurch vermieden wird, daß beim Absenken der Sämaschine zu Beginn des Sävorganges dann, wenn mehrere Scharkörper nebeneinander angeordnet sind, diese zu unterschiedlichen Zeiten in ihre Betriebsstellung gelangen und wodurch die gewünschte Funktion noch sicherer bewirkt wird.

Im folgenden wird die Erfindung anhand von Ausführungsbeispielen in Verbindung mit der Zeichnung beschrieben. Dabei zeigt:

Fig. 1    eine schematische Seitenansicht der erfindungsgemäßen Sämaschine;

Fig. 2    eine vergrößerte Seitenansicht, teils im Schnitt, des erfindungsgemäßen Scharkörpers;

Fig. 3    eine Schnittansicht entlang der Linie III-III von Fig. 2;

Fig. 4    eine Ansicht ähnlich Fig. 2, wobei jedoch der Scharkörper aus der in Fig. 2 gezeigten Betriebsstellung in eine Schwenkstellung verschwenkt ist;

Fig. 5    eine Ansicht ähnlich Fig. 2;

Fig. 6     eine Ansicht ähnlich Fig. 4;

Fig. 7     eine schematische Seitenansicht eines Trägers und des erfindungsgemäßen Scharkörpers;

Fig. 8     eine Seitenansicht ähnlich Fig. 7; und

Fig. 9     eine schematische Seitenansicht eines weiteren Ausführungsbeispiels des erfindungsgemäßen Scharkörpers.

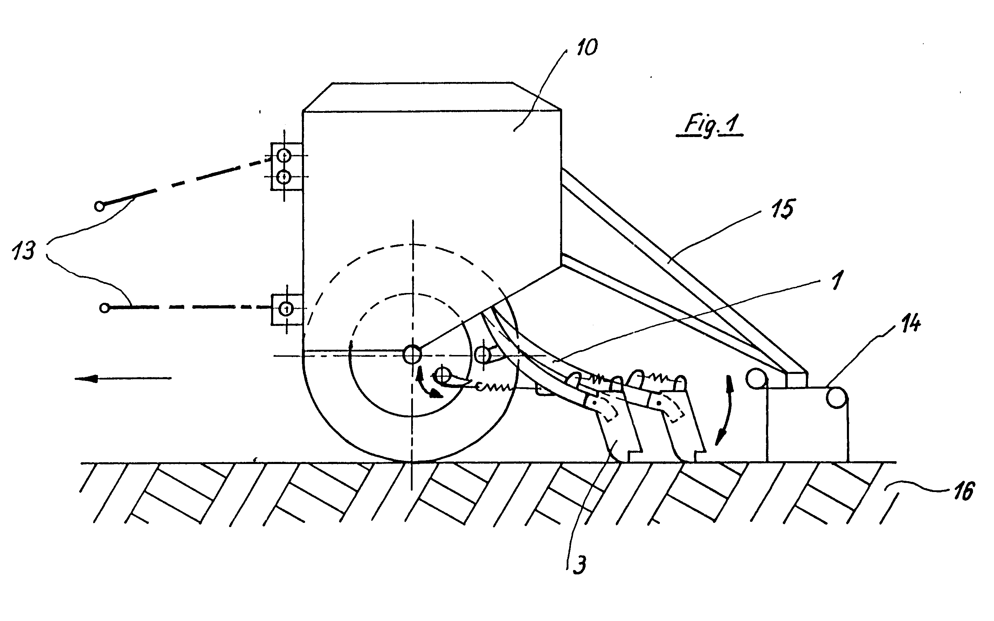

In Fig. 1 ist in schematischer Weise eine Sämaschine 10 dargestellt, welche mittels eines Gestänges 13 an einem nicht dargestellten Schlepper oder Zugfahrzeug gelagert ist. An der dem Zugfahrzeug abgewandten Seite der Sämaschine 10 sind mehrere Träger 1 gelagert, an deren freien Enden jeweils ein Scharkörper 3 vorgesehen ist. Weiterhin weist die Sämaschine 10 mehrere Striegelzinken (14) auf, welche mittels geeigneter Träger 15 an der Sämaschine 10 gelagert sind. Bei der Fig. 1 gezeigten Darstellung ist die Sämaschine 10 auf einem nur schematisch dargestellten Erdboden oder Boden 16 angeordnet.

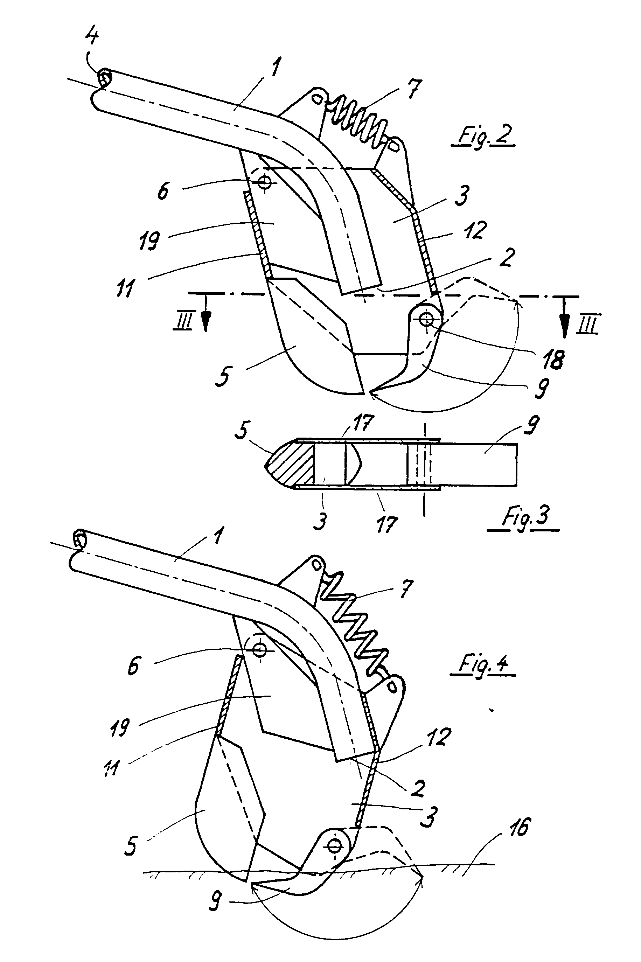

Fig. 2 zeigt in Seitenansicht, teils im Schnitt, eine vergrößerte Darstellung des freien Endbereichs des Trägers 1 und des erfindungsgemäßen Scharkörpers 3. Der Scharkörper 3 ist, wie in der Schnittansicht (siehe Fig. 3) ersichtlich ist, im wesentlichen in Form eines rechteckigen, rohrartigen Körpers ausgebildet. Der Scharkörper 3 weist eine erste, der Sämaschine zugewandte Wandung 11, eine zweite, der Sämaschine 10 abgewandte Wandung 12, sowie Seitenwandungen 17 auf. Der obere und der untere Bereich des Scharkörpers 3 sind jeweils offen ausgebildet, so daß der Träger 1, welcher bei dem gezeigten Ausführungsbeispiel in Form eines Saatrohres 4 ausgestaltet ist, von oben in den Scharkörper 3 einführbar ist. Das aus einer Austrittsöffnung 2 des Trägers 1 bzw. Saatrohrs 4 austretende Saatgut kann nach unten aus dem Scharkörper 3 austreten. In Fahrtrichtung vorne weist der Scharkörper eine fest an diesem angeordnete Scharspitze 5 auf, welche dazu dient, eine Furche in den Ackerboden zu ziehen, in welche das Saatgut eingebracht werden kann. An der der Scharspitze 5 abgewandten Seite weist der Scharkörper eine Stützklappe 9 auf, welche um eine horizontale Achse 18 verschwenkbar ist und welche in der in Fig. 2 gestrichelt gezeichneten Stellung während des Sävorganges hinter dem Scharkörper hergezogen wird, um einen Teil der Ackerfurche zuzustreichen.Wenn der Scharkörper angehoben wird, so wie dies in Fig. 2 gezeigt ist, ist die Stützklappe schwerkraftbedingt verschwenkbar.

Erfindungsgemäß ist der Scharkörper 3 an dem Träger 1 so gelagert, daß er um eine horizontale Achse 6 verschwenkbar ist. Bei der in Fig. 2 gezeigten Betriebsstellung befindet sich die erste Wandung 11 des Scharkörpers 3 in Anlage an einem Stützbauteil 19, welches fest mit dem Träger 1 verbunden ist. Der Scharkörper 3 wird mittels einer Zugfeder 7 in diese Betriebsstellung vorgespannt. Während des Sävorganges verbleibt der Scharkörper bei einer Vorwärtsfahrt der Sämaschine (nach links in Fig. 2) in dieser Stellung.

In Fig. 4 ist eine Verschwenkstellung des in Fig. 2 gezeigten Ausführungsbeispiels des Scharkörpers dargestellt. In dieser Verschwenkstellung, welche durch eine Rückwärtsbewegung des Trägers 1 bzw. der Sämaschine hervorgerufen wird, befindet sich die zweite Wandung 12 in Anlage an den Träger 1, Fig. 4 zeigt somit einen Zustand, bei welchem der Scharkörper 3 um den maximalen Betrag verschwenkt wurde. Wie anschließend noch erläutert werden wird, tritt während der Verschwenkung keine Longitudinalbewegung zwischen dem Kontaktbereich zwischen dem Erdboden 16 und der Scharspitze 5 auf, wodurch ein Eindringen von Erdreich in den offenen Bereich des Scharkörpers 3 vermieden wird.

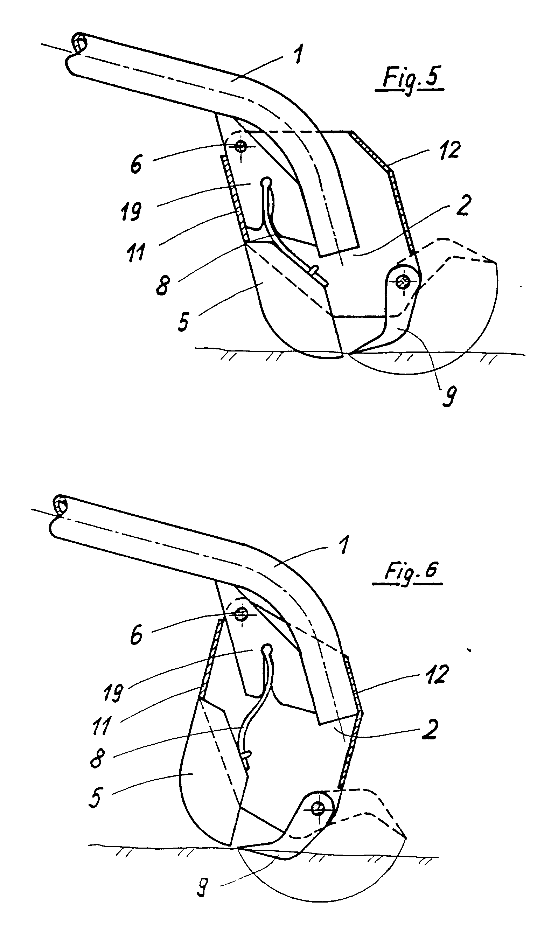

In den Fig. 5 und 6 ist ein weiteres Ausführungsbeispiel der Erfindung dargestellt, welches sich von dem Ausführungsbeispiel der Fig. 2 bis 4 lediglich darin unterscheidet, daß anstelle der Zugfeder 7 eine Blattfeder 8 verwendet wird. Dies kann sich insbesondere dann als vorteilhaft erweisen, wenn durch den Einsatz der Sämaschine die Gefahr besteht, daß die Zugfeder 7 durch Erdreich oder durch andere Anlagerungen zugesetzt und damit in ihrer Betriebsweise behindert wird. Diese Ausführungsbeispiele zeigen Konstruktionen, die wenig anfällig gegen Beschädigungen sind.

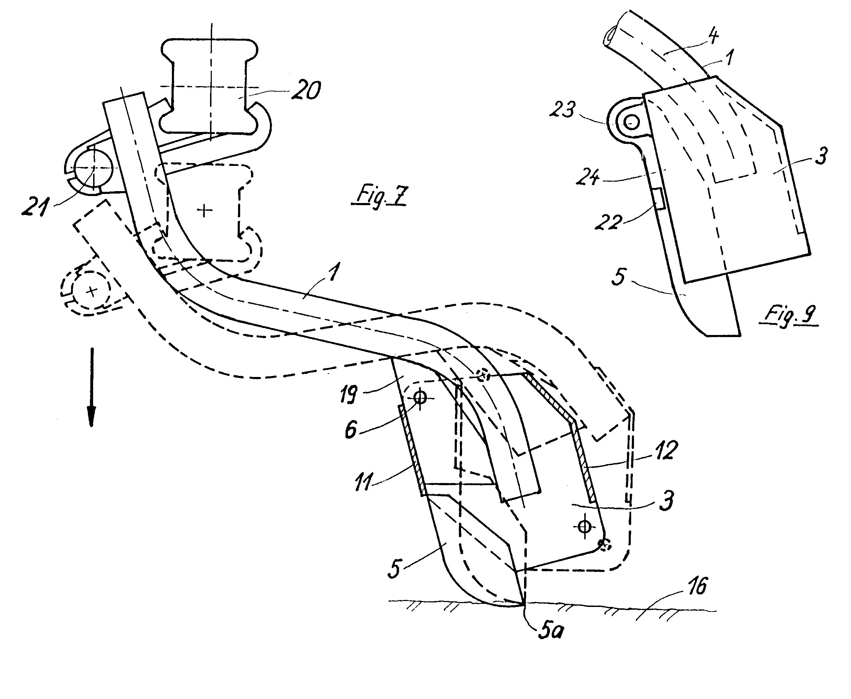

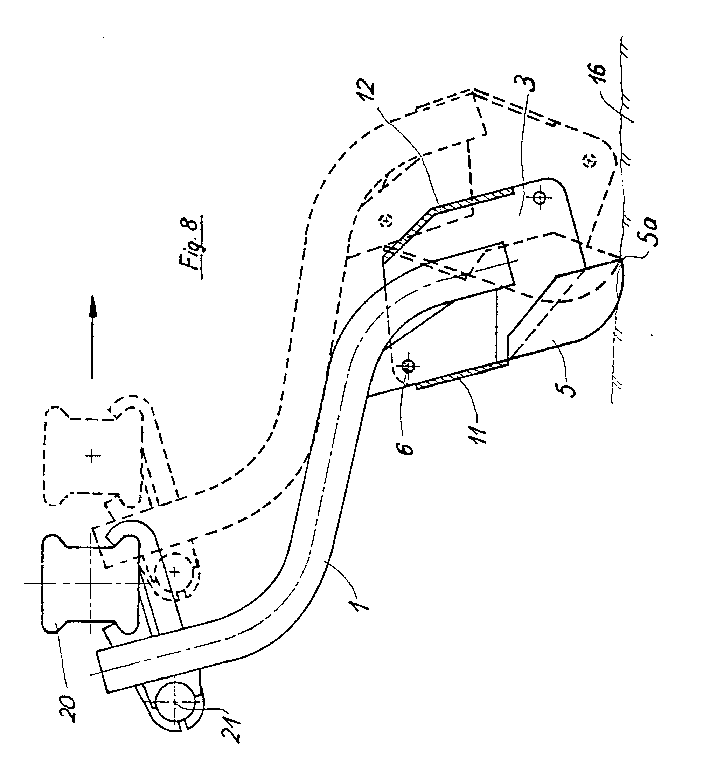

Die Fig. 7 und 8 zeigen in schematischer Darstellung Seitenansichten des Trägers 1 und der erfindungsgemäß ausgebildeten Scharkörper 3, wobei auf eine Darstellung der Federn 7, 8 aus Gründen der Übersichtlichkeit verzichtet wurde. Um während des Sävorganges Höhenunterschiede des Erdbodens 16 ausgleichen zu können, ist der Träger 1 an einem Rahmen 20 der Sämaschine 10 so angeordnet, daß er in einen gewissen Bereich um eine horizontale Achse 21 verschwenkbar ist. Diese Verschwenkbarkeit ist erforderlich, um Unterschiede zwischen der Oberfläche des Erdbodens 16 und dem Rahmen 20 der Sämaschine 10 auszugleichen, so wie dies in Fig. 7 dargestellt ist. Bei einem Absenken der Sämaschine bzw. des Rahmens 20 bei stehendem Schlepper vor Beginn des Säens verschwenkt sich der Träger 1 aus der mit durchgezogenen Linien gezeigten Ausgangsstellung in eine in der Figur 7 mit gestrichelten Linien dargestellten Schwenkstellung. Wie dort dargestellt, führt eine derartige Verschwenkung des Trägers 1 zu einer rückwärts gerichteten Bewegung des Endbereichs des Trägers 1. Um bei einer derartigen Bewegung ein Eindringen von Erdreich im unteren Bereich des Scharkörpers und damit ein Verstopfen der Austrittsöffnung für das Saatgut zu verhindern, verschwenkt der Scharkörper 3 von der mit ausgezogenen Linien dargestellten Betriebsstellung, in welcher die erste Wandung 11 an dem Stützbauteil 19 anliegt, in die mit gestrichelten Linien gezeigte Verschwenkstellung, in welcher die zweite Wandung 12 gegen den Träger 1 anliegt. Aus Abbildung 7 ist deutlich zu erkennen, daß der mit dem Erdboden 16 in Kontakt kommende Bereich 5a der Scharspitze 5 keine Longitudinalbewegung relativ zu dem Erdboden 16 ausführt. Auf diese Weise wird verhindert, daß Erdreich in den unteren Bereich des Scharkörpers 3 eingedrückt wird. In Fig. 8 ist, ausgehend von der mit durchgezogenen Linien dargestellten, mit Fig. 7 übereinstimmenden Betriebsposition, eine rückwärts gerichtete Versetzung des Rahmens 20 der Sämaschine mit gestrichelten Linien dargestellt. Bei einer derartigen Rückwärtsbewegung erfolgt keine Verschwenkung des Trägers 1 um die Achse 21. Aus Fig. 8 ist deutlich zu erkennen, daß der mit dem Erdboden 16 in Kontakt befindliche Bereich 5a der Scharspitze 5 keine Longitudinalbewegung relativ zu dem Erdboden 16 ausführt, da die nach hinten gerichtete Verschiebebewegung des Rahmens 20 und des Trägers 1 durch die Verschwenkung des Scharkörpers 3 vollständig ausgeglichen wird.

Die in den Fig. 1 bis 8 dargestellten Verschwenkstellungen des Scharkörpers 3 relativ zu dem Träger 1 wurden zum Zwecke der deutlicheren Darstellung auf den dargestellten Verschwenkbereich begrenzt. Im Rahmen der Erfindung ist es selbstverständlich möglich, auch eine größere Rückwärtsbewegung der Sämaschine 10 oder eine größere Absenkbewegung, als dies in den Fig. 7 und 8 dargestellt ist, auszugleichen. Dies kann in einfacher Weise durch Veränderung der Ausgestaltung der zweiten Wandung 12 des Scharkörpers 3 erfolgen. Vorteilhaft ist ferner, daß die Achse 6 oberhalb der Scharspitze 5 liegt oder aber vor der Scharspitze.

Fig. 9 zeigt in schematischer Darstellung eine Seitenansicht eines weiteren Ausführungsbeispieles der Erfindung, bei welchem der Scharkörper 3 fest mit dem als Saatrohr 4 ausgebildeten Träger 1 verbunden ist und die Scharspitze 5 um eine horizontale Achse 23 relativ zu dem Scharkörper 3 verschwenkbar an diesem gelagert ist. Fig. 9 zeigt die Betriebsstellung der Sämaschine, bei welcher die Scharspitze 5, welche mit einem Anschlag 22 versehen ist, sich in Anlage an der der Sämaschine zugewandten Wandung 24 des Scharkörpers 3 befindet. Bei einem Auftreten einer rückwärts gerichteten Komponente erfolgt, wie bei den Ausführungsbeispielen gemäß den Fig. 1 bis 8, eine Verschwenkung der Scharspitze 5 (nach links in Fig. 9). Bei dem in Fig. 9 gezeigten Ausführungsbeispiel ist der Scharkörper 3 in ähnlicher Weise wie bei den vorhergehenden Ausführungsbeispielen ausgebildet, so daß auf eine weitergehende Beschreibung an dieser Stelle verzichtet wird. Zum Zwecke der Übersichtlichkeit wurde ferner darauf verzichtet, elastische Elemente dazustellen, welche der Vorspannung der Scharspitze 5 in die in Fig. 9 gezeigte Betriebsstellung dienen können. Diese elastischen Elemente können beispielsweise, wie bei den vorher gezeigten Ausführungsbeispielen in Form von Zugfedern oder Druckfedern ausgebildet sein. Weiterhin ist es ebenfalls möglich, bei dem in Fig. 9 dargestellten Ausführungsbeispiel eine zusätzliche Stützklappe vorzusehen, welche auf der der Scharspitze 5 gegenüberliegenden Seite des Scharkörpers 3 angeordnet werden kann.

Die Erfindung ist bei allen Arten von Sämaschinen anwendbar, wobei die Ausgestaltung des Scharkörpers 3 in entsprechender Weise angepaßt werden kann, um beispielsweise eine Bandsaat, eine Breitsaat oder eine Einzelsaat zu ermöglichen. Weiterhin ist es erfindungsgemäß möglich, einen Träger zur Lagerung des Scharkörpers vorzusehen, welcher separat zu einem Saatrohr zur Zuführung von Saatgut ausgebildet ist.

**Patentansprüche**

1. Sämaschine mit zumindest einem mittels eines um eine horizontale Achse (21) schwenkbaren Trägers (1) an der Sämaschine (10) gelagerten, eine Austrittsöffnung für Saatgut aufweisenden Scharkörper (3), mit einem im Bereich des Scharkörpers (3) mündenden Saatrohr (4) und mit einer am Scharkörper (3) angeordneten Scharspitz (5), wobei am Endbereich des Scharkörpers (3) im Bereich der Austrittsöffnung (2) eine um eine horizontale Achse (18) verschwenkbare, in eine die Austrittsöffnung (2) verschließende Stellung bringbare Stützklappe (9) vorgesehen ist, dadurch gekennzeichnet, daß der Scharkörper (3) relativ zu dem Träger (1) um eine horizontale, reelle oder ideelle erste Achse (6) schwenkbar ist.

2. Sämaschine nach Anspruch 1, dadurch gekennzeichnet, daß der Scharkörper (3) aus seiner Betriebsstellung verschwenkbar ist, in der Weise, daß die Scharspitze (5) in Richtung auf die Sämaschine zu bewegbar ist.

3. Sämaschine nach Anspruch 1, dadurch gekennzeichnet, daß der Schwenkbereich einstellbar ist.

4. Sämaschine nach Anspruch 2 oder 3, dadurch gekennzeichnet, daß der Scharkörper (3) eine vordere erste Wandung (11) und eine in einem Abstand zu der ersten Wandung (11) angeordnete hintere zweite Wandung (12) umfaßt und daß die erste Wandung (11) sich in der Betriebsstellung in Anlage an dem Träger (1) befindet, während die zweite Wandung (12) in der Schwenkstellung in Anlage an den Träger (1) gelangt.

5. Sämaschine nach einem der Ansprüche 3 oder 4, dadurch gekennzeichnet, daß der Scharkörper (3) mittels eines elastischen Elements in seine Betriebsstellung vorgespannt ist.

6. Sämaschine nach Anspruch 5, dadurch gekennzeichnet, daß die Vorspannung mittels einer am Träger (1) und am Scharkörper (3) angreifenden Zugfeder (7) erfolgt.

7. Sämaschine nach Anspruch 5, dadurch gekennzeichnet, daß die Vorspannung mittels einer zwischen dem Träger (1) und dem Scharkörper (3) angeordneten Blattfeder (8) erfolgt.

8. Sämaschine mit zumindest einem mittels eines um eine horizontale Achse (21) schwenkbaren Trägers (1) an der Sämaschine (10) gelagerten, eine Austrittsöffnung für Saatgut aufweisenden Scharkörper (3) mit einem im Bereich des Scharkörpers (3) mündenden Saatrohr (4) und mit einer am Scharkörper (3) angeordneten Scharspitze (5), wobei am Endbereich des Scharkörpers (3) im Bereich der Austrittsöffnung (2) eine um eine horizontale Achse (18) verschwenkbare, in eine die Austrittsöffnung (2) verschließende Stellung bringbare Stützklappe (9) vorgesehen ist dadurch gekennzeichnet, daß die Scharspitze (5) relativ zu dem Träger (1) um eine horizontale, an dem Scharkörper (3) feste, erste Achse (23) schwenkbar ist.

9. Sämaschine nach Anspruch 8, dadurch gekennzeichnet, daß die Scharspitze (5) aus ihrer Betriebsstellung verschwenkbar ist, in der Weise, daß die Scharspitze (5) in Richtung auf die Sämaschine zubewegbar ist.

10. Sämaschine nach einem der Ansprüche 8 oder 9, dadurch gekennzeichnet, daß die Scharspitze (5) mittels eines elastischen Elements in ihre Betriebsstellung vorgespannt ist.

11. Sämaschine nach einem der Ansprüche 1 bis 10, dadurch gekennzeichnet, daß der Träger (1) als Saatrohr (4) ausgebildet ist.

12. Sämaschine nach einem der Ansprüche 1 bis 11, dadurch gekennzeichnet, daß nebeneinander mehrere Träger (1), Saatrohre (4), Scharkörper (3) und Scharspitzen (5) vorgesehen sind.

13. Sämaschine nach einem der Ansprüche 1 bis 12, dadurch gekennzeichnet, daß die Achse (6), um die der Scharkörper (3) verschwenkbar ist, lotrecht über der Scharspitze (5) liegt

14. Sämaschine nach einem der Ansprüche 1 bis 13, dadurch gekennzeichnet, daß der Träger (1) an der Sämaschine (10) um eine horizontale Achse (21) verschwenkbar gelagert ist.

**Claims**

1. A sowing machine having at least one share body (3) which is mounted on the sowing machine (10) by means of a bearing member (1) pivotable about a horizontal axis (21), has a discharge opening for seed, has a seed pipe (4) issuing in the region of the share body (3) and has a share point (5) arranged on the share body (3), a support flap (9), which is pivotable about a horizontal axis (18) and can be brought into a position in which it closes the discharge opening (2), being provided in the end region of the share body (3) in the region of the discharge opening (2), characterized in that the share body (3) is pivotable relative to the bearing member (1) about a horizontal real or imaginary first axis (6).

2. A sowing machine in accordance with Claim 1, characterized in that the share body (3) is pivotable from its operating position in such a manner that the share point (5) is movable in the direction of the sowing machine.

3. A sowing machine in accordance with Claim 1, characterized in that the pivot range is adjustable.

4. A sowing machine in accordance with Claim 2 or 3, characterized in that the share body (3) comprises a front first wall (11) and a rear second wall (12) arranged at a distance therefrom and in that the first wall (11) is in contact with the bearing member (1) in the operating position while the second wall (12) makes contact with the bearing member (1) in the pivot position.

5. A sowing machine in accordance with any one of Claims 3 or 4, characterized in that the share body (3) is pretensioned into its operating position by means of a resilient element.

6. A sowing machine in accordance with Claim 5, characterized in that the pretensioning takes place by means of a tension spring (7) acting on the bearing member (1) and on the share body (3).

7. A sowing machine in accordance with Claim 5, characterized in that the pretensioning takes place by means of a leaf spring (8) arranged between the bearing member (1) and the share body (3).

8. A sowing machine having at least one share body (3) which is mounted on the sowing machine (10) by means of a bearing member (1) pivotable about a horizontal axis (21), has a discharge opening for seed, has a seed pipe (4) issuing in the region of the share body (3) and has a share point (5) arranged on the share body (3), a support flap (9), which is pivotable about a horizontal axis (18) and can be brought into a position in which it closes the discharge opening (2), being provided in the end region of the share body (3) in the region of the discharge opening (7), characterized in that the share point (5) is pivotable relative to the bearing member (1) about a horizontal first axis (23) fixed on the share body (3).

9. A sowing machine in accordance with Claim 8, characterized in that the share point (5) is pivotable from its operating position in such a manner that the share point (5) is movable in the direction of the sowing machine.

10. A sowing machine in accordance with any one of Claims 8 or 9, characterized in that the share point (5) is pretensioned into its operating position by means of a resilient element.

11. A sowing machine in accordance with any one of Claims 1 to 10, characterized in that the bearing member (1) is constructed as a seed pipe (4).

12. A sowing machine in accordance with any one of Claims 1 to 11, characterized in that a plurality of bearing members (1), seed pipes (4), share bodies (3) and share points (5) are provided side by side.

13. A sowing machine in accordance with any one of Claims 1 to 12, characterized in that the axis (6), about which the share body (3) is pivotable, lies perpendicular to and above the share point (5).

14. A sowing machine in accordance with any one of Claims 1 to 13, characterized in that the bearing member (1) is mounted on the sowing machine (10) so as to be pivotable about a horizontal axis (21).

## Revendications

1. Semoir, avec au moins un corps de soc (3) présentant une ouverture de sortie pour des semences et monté sur le semoir (10) au moyen d'un élément porteur (1) pouvant pivoter autour d'un axe horizontal (21), avec un tube de semences (4) débouchant dans la région du corps de soc (3) et avec une pointe de soc (5) disposée sur le corps de sec (3), un volet de soutien (9) étant prévu sur la région terminale du corps de sec (3), dans la région de l'ouverture de sortie (2), volet qui peut pivoter autour d'un axe horizontal (18) et être amené dans une position obturant l'ouverture de sortie (2),
caractérisé en ce que le corps de sec (3) peut pivoter par rapport à l'élément porteur (1) autour d'un premier axe horizontal (6), réel ou imaginaire.

2. Semoir selon la revendication 1, caractérisé en ce que le corps de sec (3) peut être sorti par pivotement de sa position de service, de façon que la pointe de sec (5) puisse être déplacée en direction du semoir.

3. Semoir selon la revendication 1, caractérisé en ce que la plage de pivotement est réglable.

4. Semoir selon la revendication 2 ou 3, caractérisé en ce que le corps de sec (3) comprend une première paroi avant (11) et une seconde paroi arrière (12), disposée à distance de la première paroi (11), et en ce que la première paroi (11) se trouve en appui contre l'élément porteur (1) dans la position de service, tandis que la seconde paroi (12) arrive en appui contre l'élément porteur (1) dans la position après pivotement.

5. Semoir selon la revendication 3 ou 4, caractérisé en ce que le corps de sec (3) est précontraint dans sa position de service au moyen d'un élément élastique.

6. Semoir selon la revendication 5, caractérisé en ce que la précontrainte s'effectue au moyen d'un ressort de traction (7), agissant sur l'élément porteur (1) et sur le corps de sec (3).

7. Semoir selon la revendication 5, caractérisé en ce que la précontrainte s'effectue au moyen d'un ressort à lame (8), disposé entre l'élément porteur (1) et le corps de sec (3).

8. Semoir, avec au moins un corps de sec (3) présentant une ouverture de sortie pour des semences et monté sur le semoir (10) au moyen d'un élément porteur (1) pouvant pivoter autour d'un axe horizontal (21), avec un tube de semences (4) débouchant dans la région du corps de soc (3) et avec une pointe de soc (5) disposée sur le corps de soc (3), un volet de soutien (9) étant prévu sur la région terminale du corps de soc (3), dans la région de l'ouverture de sortie (2), volet qui peut pivoter autour d'un axe horizontal (18) et être amené dans une position obturant l'ouverture de sortie (2),
   **caractérisé** en ce que la pointe de soc (5) peut pivoter par rapport à l'élément porteur (1) autour d'un premier axe horizontal (23), solidaire du corps de soc (3).

9. Semoir selon la revendication 8, **caractérisé** en ce que la pointe de sec (5) peut être sortie par pivotement de sa position de service, de façon que la pointe de soc (5) puisse être déplacée en direction du semoir.

10. Semoir selon la revendication 8 ou 9, **caractérisé** en ce que la pointe de soc (5) est précontrainte dans sa position de service au moyen d'un élément élastique.

11. Semoir selon l'une quelconque des revendications 1 à 10, **caractérisé** en ce que l'élément porteur (1) est conçu comme tube de semences (4).

12. Semoir selon l'une quelconque des revendications 1 à 11, **caractérisé** en ce que plusieurs éléments porteurs (1), tubes de semences (4), corps de sec (3) et pointes de soc (5) sont prévus les uns à côté des autres.

13. Semoir selon l'une quelconque des revendications 1 à 12, **caractérisé** en ce que l'axe (6), autour duquel peut pivoter le corps de sec (3), se trouve verticalement au-dessus de la pointe de soc (5).

14. Semoir selon l'une quelconque des revendications 1 à 13, **caractérisé** en ce que l'élément porteur (1) est monté sur le semoir (10) avec possibilité de pivotement autour d'un axe horizontal (21).

Fig.1

Fig. 2

Fig. 3

Fig. 4

_Fig. 5_

_Fig. 6_

*Fig. 7*

*Fig. 9*

Fig. 8

EP 0 311 833 B1